# EUROPÄISCHE PATENTSCHRIFT

(11) **EP 0 543 829 B1**
(45) Veröffentlichungstag und Bekanntmachung des Hinweises auf die Patenterteilung: **20.04.1994**
(21) Anmeldenummer: 91912931.2
(22) Anmeldetag: 23.07.1991
(51) Int. Cl.: B23K 26/00, B23K 26/14

(54) **VORRICHTUNG UND VERFAHREN ZUM LASERSCHWEISSEN EINES ROHRES**
DEVICE AND PROCESS FOR LASER-WELDING A PIPE
DISPOSITIF ET PROCEDE POUR LE SOUDAGE PAR LASER D'UN TUBE

(30) Priorität: 17.08.1990 DE 9011959 U; 13.05.1991 DE 4115561
(43) Veröffentlichungstag der Anmeldung: 02.06.1993
(73) Patentinhaber: SIEMENS AKTIENGESELLSCHAFT, 80333 München (DE)
(72) Erfinder: KRÖHNERT, Gerhard, D-2361 Todesfelde (DE)
(86) Internationale Anmeldenummer: DE9100598
(87) Internationale Veröffentlichungsnummer: WO9203249

(56) Entgegenhaltungen:
- EP-A- 300 458

## Beschreibung

Die Erfindung bezieht sich auf eine Vorrichtung und ein verfahren zum Laserschweißen eines Rohres entlang seinem Innenumfang mit einer in das Rohr einführbaren Sonde, gemäß dem Oberbegriff des Anspruchs 1 bzw. 16.

Eine solche Vorrichtung und ein solches Verfahren zum Laserschweißen eines Rohres mit einer in das Rohr einführbaren Sonde ist beispielsweise aus der EP-A1-0 300 458 bekannt. Die dort offenbarte Sonde ist über einen Lichtwellenleiter mit einem Nd:YAG-Festkörperlaser verbunden. Das innerhalb der Sonde aus einem Ende des Lichtwellenleiters austretenoe Laserlicht wird durch ein aus mehreren Linsen bestehendes Linsensystem und einen Umlenkspiegei auf einen außerhalb der Sonde liegenden Brennpunkt fokussiert. Der Umlenkspiegel ist unter einem Winkel von 45° gegen die Längsachse der Sonde geneigt und lenkt den durch das Linsensystem fokussierten und sich innerhalb der Sonde zwischen dem Linsensystem und aem Umlenkspiegel ausbreitenden Laserstrahl um 90° um. Der umgelenkte Laserstrahl verläßt die Sonde durch eine im Gehäuse der Sonde radial angeordnete zylindrische Austrittsöffnung. Die Sonde ist außerdem mit einem Strömungskanal für ein Schutzgas versehen, das in der Gehäusewand der Sonde verläuft, in die Austrittsöffnung mündet, und in den Raum zwischen dem Umlenkspiegel und dem Schweißort ausströmt.

Bei dieser bekannten Vorrichtung wird somit der Schutzgasstrom unmittelbar gegenüber der Schweißstelle in einen ins Innere der Sonde gerichteten Teilgasstrom und einen zur Schweißstelle hin gerichteten Teilgasstrom aufgespalten. Dies führt zu einer Wirbelbildung im Bereich der Austrittsöffnung, so daß sich Schweißdampf oder SchweiGplasma und insbesondere bei Verwendung eines gepulsten Lasers aus der Schmelze ausgelöste Tropfen auf dem Umlenkspiegel und an der Austrittsöffnung niederschlagen können und die Lebensdauer der Sonde wesentlich verkürzen.

Der Erfindung liegen nun die Aufgaben zugrunde, eine Vorrichtung und ein Verfahren zum Laserschweißen eines Rohrs entlang seinem Innenumfang mit einer in das Rohr einführbaren Sonde anzugeben, mit denen ein Niederschlag von Schweißdampf auf dem Umlenkspiegel und im Bereich der Austrittsöffnung weitgehend verringert sind.

Die genannten Aufgaben weroen gemäß der Erfindung jeweils mit den Merkmalen des Anspruches 1 bzw. 16 gelöst. Eine in das Rohr einführbare Sonde gemäß der Erfindung enthält
a) wenigstens ein Abbildungselement zum Fokussieren und Umlenken eines sich innerhalb der Sonde im wesentlichen entlang ihrer Längsachse ausbreitenden Laserstrahlbündels,
b) eine Austrittsöffnung durch das ein von dem Abbildungselement erzeugtes umgelenktes fokussiertes Laserstrahlbündel aus der Sonde austritt,
c) innerhalb der Sonde angeordnete Mittel zum Führen eines Schutzgasstromes bis zur Austrittsöffnunh, der wenigstens zu einem Teil durch die Austrittsöffnung ausströmt, sowie
d) Mittel mit denen ein Teil des sich innerhalb der Sonde ausbreitenden Schutzgasstromes vor Erreichen der Austrittsöffnung abzweigbar und mit einer zur Austrittsöffnung hin gerichteten axialen Strömungskomponente zur Außenoberfläche der Sonde führbar ist.

Dadurch ergibt sich zwischen der Außenwand der Sonde und dem Innenumfang des Rohres eine axial gerichtete Strömung, mit der aus der Schweißschmelze austretendes Schweißgut rasch aus dem Bereich der Austrittsöffnung in Richtung zum Kopf der Sonde hin geführt wird. Dadurch wird der Niederschlag von Schweißdampf im Bereich der Austrittsöffnung und auf den Abbildungselementen verringert.

In einer bevorzugten Ausführungsform sind innerhalb der Sonde Mittel zur Einstellung des Mengenverhältnisses der beiden Teilgasströme, insbesondere eine in einem Strömungskanal für einen Teilgasstrom angeordnete Reduzierdüse, vorgesehen.

In einer vorteilhaften Ausgestaltung der Erfindung ist zur Führung des nach außen abgezweigten Teilgasstromes eine die Sonde umgebende Hülse vorgesehen, die an ihrer Innenoberfläche mit einer Ringnut versenen ist, in die ein in der Sonde verlaufender Strömungskanal für den Teilgasstrom mündet. Die Hülse ist mit axialen Bohrungen versehen, die sich von der dem Kopf der Sonde zugewandten Stirnfläche der Hülse bis zur Ringnut erstrecken. Dadurch ergibt sich ein besonders homogener axialer Schutzgasstrom in den zwischen Sonde und Rohr befindlichen Zwischenraum.

Ein Niederschlag von verdampfendem Schweißgut auf dem Umlenkspiegel wird in einer weiteren Ausgestaltung der Erfindung dadurch zusätzlich verringert, daß Mittel vorgesehen sind, mit denen von einem sich innerhalb der Sonde ausbreitenden Schutzgasstrom an der Austrittsöffnung ein Teilgasstrom abgezweigt und durch innnerhalb der Sonde liegende Kanäle geführt wird.

Insbesondere ist vorgesehen, daß die Kanäle in eine Ausnehmung des Umlenkspiegels münden, die sich unmittelbar gegenüber der Austrittsöffnung befindet.

In einer weiteren vorteilhaften Ausgestaltung der Erfindung ist ein Abbildungselement vorgesehen, das ein in einem außerhalb der Sonde liegenden Brennpunkt fokussiertes umgelenktes Laserstrahlbündel erzeugt, dessen Ausbreitungsrichtung schräg zur Längsachse orientiert ist. Als Abbildungselement ist dabei eine optische Komponente zu verstehen, mit der die Ausbreitungsrichtung eines Laserstrahles geändert werden kann, beispielsweise ein Planspiegel, ein Spiegel mit gekrümmter Oberfläche oder eine Linse.

Durch die schräge Auskopplung des umgelenkten Laserstrahlbündels wird vermieden, daß sich die Austrittsöffnung unmittelbar gegenüber dem Schweißort befinden muß, so daß der Niederschlag von Schweißdampf im Bereich der Austrittsöffnung und im Innern der Sonde verringert ist.

Der Neigungswinkel des umgelenkten Laserstrahls gegen die Längsachse der Sonde beträgt vorzugsweise zwischen 60° und 80°. Dadurch ist gewährleistet, daß auch bei einer großen Austrittsöffnung für das Laserlicht ein Zurückreflektieren des Laserlichtes in das Innere der Sonde praktisch vermieden ist.

In einer bevorzugten Ausgestaltung der Erfindung ist in der Sonde zum Umlenken des fokussierten Laserstrahles ein Umlenkspiegel mit ebener Spiegelfläche vorgesehen, deren Oberflächennormale gegen die Längsachse der Sonde einen Winkel einschließt, der größer als 45° ist, vorzugsweise zwischen 50° unc 60° beträgt.

In einer weiteren Ausgestaltung der Erfindung ist ein konkaver umlenkspiegel vorgesehen, der sowohl zur Fokussierung als auch zum Umlenken der sich im Mittel entlang der Längsachse der Sonde ausbreitenden Laserstrahlen vorgesehen ist. Dadurch ist der Querschnitt des auf den Umlenkspiegel auftreffenden Laserstrahlenbündels gegenüber der Ausführungsform mit einem ebenen Umlenkspiegel vergrößert. Die pro Flächeneinheit auf dem Umlenkspiegel auftreffende Strahlungsleistung und somit auch die lokale Aufheizung des Umlenkspiegels sind dadurch reduziert.

In einer weiteren bevorzugten Ausführungsform sind zur Verbesserung der Abbildungseigenschaften des Abbildungssystems bei einer über einen Lichtwellenleiter mit einem Laser optisch gekoppelten Sonde zwischen dem Ende des Lichtwellenleiters und dem konkaven Umlenkspiegel Mittel zum Kollimieren des aus dem Lichtwellenleiter austretenden Laserstrahlbündels vorgesehen.

Insbesondere ist ein Umlenkspiegel aus einem Werkstoff mit hoher Wärmeleitfähigkeit, vorzugsweise Kupfer Cu, vorgesehen. Durch diese Maßnahme wird die thermische Belastung des Umlenkspiegels weiter verringert und somit die Haltbarkeit der Reflektorschicht zusät-zlich erhöht.

In einer bevorzugten Ausführungsform ist zum Auskoppeln des umgelenkten Laserstrahlbündels aus der Sonde eine Austrittsöffnung vorgesehen, die einem aus ihr ausströmenden Schutzgasstrom eine axial gerichtete Strömungskomponente erteilt.

Ein Verfahren zum Laserschweißen eines Rohres entlang seinem Innenumfang umfaßt folgende Merkmale:
a) aus einem sich innerhalb einer in das Rohr eingeführten Sonde im wesentlichen entlang ihrer Längsachse ausbreitenden Laserstrahlbündel wird ein umgelenktes und auf eine Stelle am Innenumfang des Rohres fokussiertes Laserstrahlbündel erzeugt,
b) das Laserstrahlbündel tritt durch eine Austrittsöffnung aus der Sonde aus,
c) der Sonde wird ein Schutzgasstrom zugeführt, der in ihrem Inneren in Richtung zur Austrittsöffnung strömt, wobei
d) ein Teil des Schutzgasstromes durch die Austrittsöffnung ausströmt und
e) ein weiterer Teil vor Erreichen der Austrittsöffnung abgezweigt wird und mit einer axialen Strömungskomponente in den zwischen dem Rohr und der Sonde befindlichen Zwischenraum geleitet wird.

Eine zusätzliche Verringerung von Schweißgut-Niederschlag auf dem Umlenkspiegel wird dadurch erreicht, daß von dem sich innerhalb der Sonde zur Austrittsöffnung strömenden Schutzgas innerhalb der Sonde an der Austrittsöffnung ein weiterer Teilgasstrom mit einer axial gerichteten Strömungskomponente abgezweigt wird, der sich innerhalb der Sonde ausbreitet.

In einer bevorzugten Ausgestaltung des Verfahrens wird das Laserstrahlbündel schräg zur Längsachse der Sonde umgelenkt.

In einer weiteren vorteilhaften Ausgestaltung des Verfahrens ist die Verwendung eines im cw-Betrieb arbeitenden Festkörperlasers vorgesehen. Dadurch wird ein Auslösen von Tropfen aus der Schweißschmelze vermieden.

Zur weiteren Erläuterung der Erfindung wiro auf die Ausführungsbeispiele der Zeichnung verwiesen, in deren

Figur 1 eine in das Rohr eingeführte Sonde gemäß der Erfindung 5 in einem Längsschnitt veranschaulicht ist. In

Figuren 2, 3 und 4 zeigen jeweils in einem vergrößerten Ausschnitt vorteilhafte Ausgestaltungen der Sonde im Bereich der Umlenkeinrichtung.

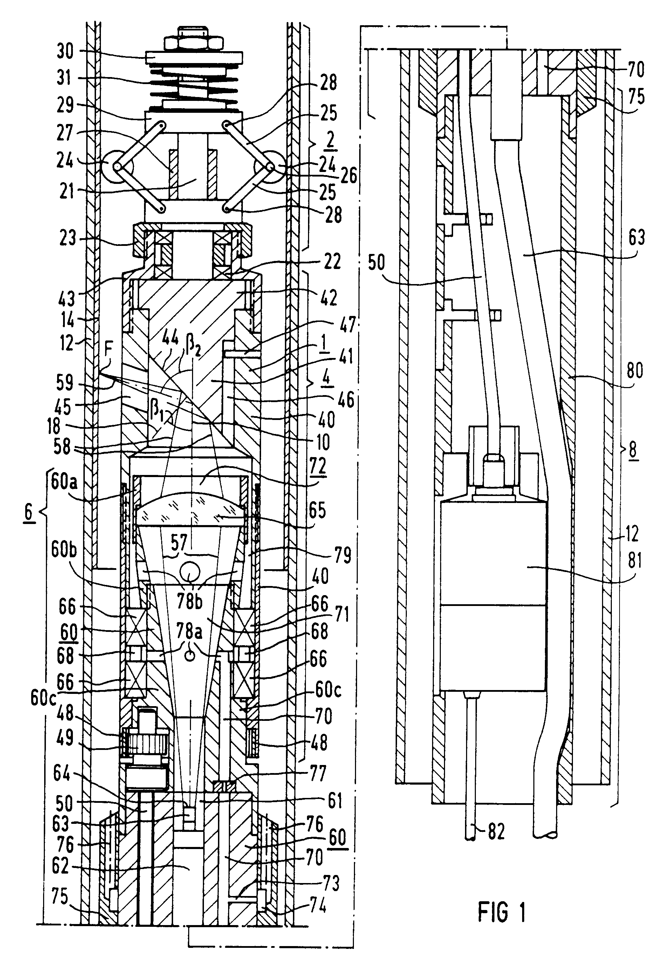

Entsprechend **FIG 1** enthält eine Sonde 1 gemäß der Erfincung eine Zentriereinheit 2, eine umlenkeinheit 4, eine Fokusslereinheit 6 sowie eine Antriebseinheit 8, die hintereinander entlang einer Längsachse 10 der Sonde 1 angeordnet sind. Die Sonde 1 ist in ein zu bearbeitendes Rohr 12 eingeführt und ragt mit ihrem die Umlenkeinheit 4 enthaltenden Kopfteil in das Innere eines in das Rohr 12 eingefügten Sleeverohres 14, das mit dem Rohr 12 verschweißt werden soll.

Die Zentriereinheit 2 umfaßt eine Welle 21, die am kopfseitigen Ende der Sonde 1 über Kugellager 22 drehbar auf der Umlenkeinheit 4 gelagert und mit einer Überwurfmutter 23 in axialer Richtung fixiert ist. Die Zentriereinheit enthält wenigstens drei Rollen 24, von denen nur zwei in der Figur dargestellt sind, und die jeweils federnd über ein Drehgelenkgetriebe mit zwei Gliedern 25 gelagert sind. Die beiden Glieder 25 bilden das Schenkelpaar eines gleichschenkligen Dreiecks und berühren sich in einem die Rolle 24 aufnehmenden Drehgelenk 26. Auf der Welle 21 sind die beiden Glieder 25 ebenfalls über Drehgelenke 28 verschiebbar gelagert sind. Eines dieser beiden Drehgelenke 28 ist kraftschlüssig an einen beweglichen Flansch 29 gekoppelt, der die Welle 21 umgibt. An der Welle 21 ist an ihrem freien Ende ein weiterer Flansch 30 befestigt. Zwischen dem Flansch 29 und dem Flansch 30 ist eine Spiralfeder 31 angeordnet, so daß eine radial nach inner gerichtete Bewegung der Rolle 26 gegen die Wirkung dieser Spiralfeder 31 erfolgt. Eine auf der Welle 21 angeordnete Distanzhülse 27 verhindert das Zusammenklappen des Drehgelenkes 26 und erleichtert das Einführen der Sonde 1 in cas Rohr 12.

Die Umlenkeinheit 4 umfaßt ein zylindrisches Gehäuse 40, in dem ein Umlenkspiegel 41 angeordnet ist. Der Umlenkspiegel 41 besteht aus einem massiven zylindrischen Kupferblock, der an seinem der Zentriereinheit 2 zugewandten Ende eine flanschartige Erweiterung 42 hat, die zur axialen Fixierung des Umlenkspiegels 41 mit einer Überwurfmutter 43 dient. Der Kupferblock ist an seinem von der flanschartigen Erweiterung 42 abgewandten Ende mit einer schräg zu seiner Längsachse orientierten Stirnfläche versehen. Diese Stirnfläche ist mit einem spiegelnden Uberzug beschichtet und bildet eine Spiegelfläche 44. Als spiegelnder Uberzug ist beispielsweise eine dielektrische Schicht, vorzugsweise Titannitrid TiN, oder eine metallische Schicht, vorzugsweise aufgedampftes Gold Au, vorgesehen. Die reflektierende Schicht kann zusätzlich noch mit einer Schutzschicht aus Quarz versehen sein. Die Spiegelfläche 44 ist innerhalb der Sonde 1 derart angeordnet, daß ihre Normale 18 mit der Längsachse 10 der Sonde einen Winkel β1 einschließt, der größer als 45° ist, vorzugsweise zwischen 50° und 60° beträgt. Ein sich im Mittel entlang der Längsachse 10 ausbreitendes und auf die Spiegelfläche 44 auftreffendes Laserstrahlbündel 58 wird somit schräg nach vorne umgelenkt. Der Mittenstrahl des umgelenkten Laserstrahlbündels 59 tritt gegenüber der Längsachse 10 unter einem Winkel β2 zwischen 60° und 80° aus dem Gehäuse 40 durch eine Austrittsöffnung 45 aus. Im Beispiel der Figur ist als Austrittsöffnung 45 eine ebenfalls schräg zur Längsachse 10 verlaufende Bohrung vorgesehen.

Der Umlenkspiegel 41 ist außerdem durch eine parallel zu seiner Längsrichtung 10 verlaufenden Nut 46 sowie einen Paßstift 47 gegen ein Verdrehen im Gehäuse 40 gesichert.

Durch die Verwendung eines massiven Kupferblockes als Umlenkspiegel 41 wird die Aufheizung der Spiegelfläche durch den Laserstrahl 58 verringert und die Lebensdauer der Verspiegelung erhöht.

Das Gehäuse 40 der Umlenkeinheit 4 ist an seinem vom Umlenkspiegel 41 abgewandten Ende am Innenumfang mit einem Zahnkranz 48 versehen, in den ein von der Antriebseinheit 8 aus angetriebenes Ritzel 49 eingreift. Dieses Ritzel 49 ist drehmomentschlüssig mit einer biegsamen welle 50 verbunden, die an die Antriebswelle eines in der Antriebseinheit 8 angeordneten Elektromotors 81 gekoppelt ist. Über das vom Elektromotor 81 angetriebene Ritzel 49 wird das Gehäuse 40 in eine Drehbewedung versetzt, so daß die Stelle F, an der das austretende Laserstrahlbündel 59 auf dem Innenmantel des zu schweißenden Sleeverohres 14 auftrifft, in Umfangsrichtung bewegt wird und eine Kreisbahn beschreibt.

Zwischen der Umlenkeinheit 4 und der Antriebseinheit 8 ist die Fokussiereinheit 6 angeordnet, deren Gehäuse 60 starr mit dem Gehäuse 80 der Antriebseinheit 8 verbunden ist. Das Gehäuse 60 enthält eine zentrale Bohrung 61, in die auf der der Antriebseinheit 8 zugewandten Seite eine Hülse 62 zur Aufnahme eines Lichtwellenleiters 63 eingelegt ist. Der Lichtwellenleiter 63 mündet mit seinem freien Ende 64 in der Bohrung 61 und wird durch die Hülse 62 axial zentriert. Mit seinem anderen Ende ist der Lichtwellenleiter 63 an einen in der Figur nicht dargestellten Laser, vorzugsweise ein Festkörperlaser, insbesondere ein Nd:YAG-Festkörperlaser, gekoppelt.

Am dem Umlenkspiegel 41 zugewandten Ende der Fokussiereinheit 6 ist ein Fokussierelement, vorzugsweise eine Linse 65 oder ein Linsensystem, angeordnet, die ein aus dem Ende 64 des Lichtwellenleiters 63 austretendes divergentes Laserstrahlbündel 57 fokussiert. Die Lage des Fokus F des Laserstrahlbündels 59 kann durch die Veränderung des Abstandes zwischen dem Ende 64 und der Linse 65 Justiert werden.

Das Gehäuse 40 umgreift das Gehäuse 60 im Bereich der Linse 65 und ist über Kugellager 66 und Distanzhülsen 68 auf der Gehäuse 60 drehbar gelagert und mit ihm axial kraftschlüssig verbunden. Durch die Drehung des Ritzels 49 wird somit nur das die Umlenkeinheit 41 tragende Gehäuse 40 in Drehbewegung versetzt. Die Linse 65 und der Lichtwellenleiter 63 nehmen an dieser Drehbewegung nicht teil.

Die Linse 65 wird von mehreren kraftschlüssig miteinander verbundenen und nicht rotierenden Gehäuseteilen 60a, 60b, 60c getragen, die in das Innere des Gehäuses 40 hineinragen. Die Gehäuseteile 60b und 60c bilden einen annähernd V-förmigen Zwischenraum 71, der über Bohrungen 78a mit einem im Gehäuseteil 60c angeordneten Strömungskanal 70 verbunden ist. Dieser Strömungskanal 70 führt Schutzgas, beispielsweise Argon, in den zwischen Linse 65 und dem freien Ende 64 des Lichtwellenleiters 63 befindiichen Zwischenraum 71. Im Strömungskanal 70 ist eine querschnittsverengende Reduzierdüse 77 eingelegt. Das im Strömungskanal 70 oberhalb der Reduzierdüse 77 strömende Schutzgas tritt über die Bohrungen 78a in den Zwischenraum 71 ein, verläßt über weitere Bohrungen 78b im Gehäuseteil 60b den Zwischenraum 71, tritt in einen Ringkanal 79 aus und gelangt von dort in den zwischen Linse 65 und Umlenkspiegel befindlichen Zwischenraum 72.

Das auf diese Weise die Linse 65 umströmende und am Umlenkspiegel 41 vorbeiströmende Schutzgas verläßt die Sonde durch cie Austrittsöffnung 45. Dadurch wird nicht nur die SchweiGstelle mit Schutzgas beblasen, sondern außerden eine Kühlung der von den Laserstrahlen 57 und 58 beaufschlagten Abbilaungselemente bewirkt. Außerdem wird durch den nach außen gerichteten Schutzgasstrom ein Niederschlag von Schweißdampf auf cem Umlenkspiegel verhindert.

Die Austrittsöffnung 45 wird im Beispiel der Figur durch eine in oer Wand des Gehäuses 40 schräg nach vorne gerichtete Borrung gebildet. Dadurch erhält das durch die Austrittsöffnung 45 strömende Schutzgas zusätzlich eine axiale Strömungskomponente, die ein wegführen des Schweißdampfes aus dem Bereich der Austrittsöffnung 45 unterstützt.

Der Strömungskanal 70 ist außerdem mit einem radial abzweigenden Strömungskanal 73 verbunden, der in eine Ringnut 74 einer das Gehäuse 60 umgebenden Hülse 75 mündet. Die Hülse 75 bildet eine manschettenförmige Erweiterung der Sonde 1. Parallel zur Längsachse 10 der Sonde 1 ist die Hülse 75 mit mehreren Bohrungen 76 versehen, die eine Verbindung zur Ringnut 74 herstellen. Durch den Querkanal 73 wird von dem ausgehend von der Antriebseinheit 8 in den Strömungskanal 70 eintretenden Schutzgasstrom ein radialer Teilgasstrom abgezweigt, der in der Ringnut 74 in eine axiale Richtung umgelenkt wird und an der der Umlenkeinheit 4 zugewandten Stirnfläche der Hülse 75 in den zwischen dem Rohr 12 und dem Außenmantel der Sonde 1 befindlichen Kanal austritt. Dadurch ist die Aufrechterhaltung einer effektiven Schutzgasatmosphäre im Bereich der Schweißstelle gewährleistet. Außerdem wird der beim Aufschmelzen entstehende Schweißdampf durch die Axialströmung wirksam von der Schweißstelle abgeführt und die Gefahr, daß sich Schweißdampf im Innern der Sonde 1 niederschlägt, wird verringert.

Zum Einstellen des Mengenverhältnisses zwischen dem sich innerhalb der Sonde 1 zum Umlenkspiegel 41 hin strömenden Schutzgasstrom und dem radial nach außen abgeführten Schutzgasstrom ist die in den Strömungskanal 70 eingelegte Reduzierdüse 77 vorgesehen.

Das Gehäuse 80 der Antriebseinheit 8 ist an seinem von der Fokussiereinheit 6 abgewandten Ende zur Aufnahme eines in der Figur nicht dargestellten Schubschlauches vorgesehen, durch den das Schutzgas zur Sonde transportiert wird, und der den Lichtwellenleiter 63 und die zur elektrischen Versorgung ces Elektromotors 81 erforderlichen Leitungen 82 aufnimmt.

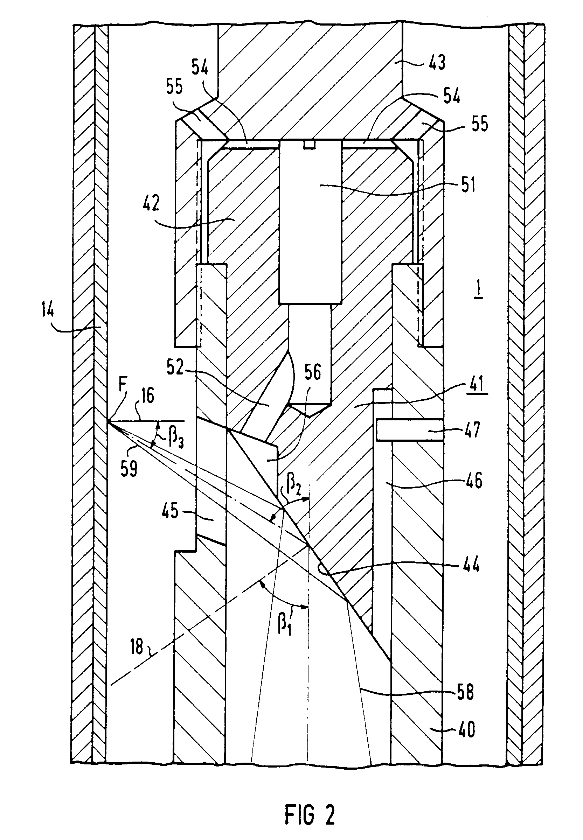

Im Ausführungsbeispiel gemäß **FIG 2** ist ein Umlenkspiegel 41 mit einer zentralen Bohrung 51 versehen, die ausgehend von der flanschartigen Erweiterung 42 in das Innere des Umlenkspiegels 41 geführt ist und durch eine schräg nach außen verlaufende und an der Spiegelfläche 44 im Bereich der Austrittsöffnung 45 in eine Ausnehmung 56 austretende Bohrung 52 verbunden ist. Die flanschartige Erweiterung 42 ist an ihrer der Überwurfmutter 43 zugewandten Stirnfläche mit mehreren radialen Nuten 54 versehen. Diese radialen Nuten 54 stellen eine Verbindung zwischen der zentralen Bohrung 51 und innerhalb der Überwurfmutter 43 schräg nach außen verlaufenden Bohrungen 55 her.

Der sich entlang dem Umlenkspiegel 41 innerhalb des Gehäuses 40 ausbreitende Schutzgasstrom wird somit vor Verlassen des Gehäuses durch die Austrittsöffnung 45 nochmals aufgespalten. Ein Teilgasstrom gelangt über die Bohrung 52 in die Bohrung 51 des Umlenkspiegels 41 und tritt über die Bohrungen 55 in der Überwurfmutter 43 aus der Sonde 1 aus. Durch diesen Gasstrom im Inneren des Umlenkspiegels 41 wird die Kühlung des Umlenkspiegels 41 verbessert und seine Lebensdauer erhöht.

Die Austrittsöffnung 45 und die Ausnehmung 56 schließen unmittelbar aneinander an, so daß ein vom strömenden Schutzgas nicht erfaßter Totraum vermieden ist. Solche Toträume zwischen Umlenkspiegel 41 und der Gehäusewand, in der die Austritts-Öffnung 45 angeordnet ist, würden nämlich zu einer Verwirbelung und somit zu einer Erhöhung des Niederschlags von Schweißgut auf der Spiegelfläche 44 führen.

Der Figur ist außerdem zu entnehmen, daß das aus der Sonde 1 austretende Laserstrahlbüncel 59 im Fokus F schräg zur Innenoberfläche des Rohres 14 auftrifft. Zwischen der vom Fokus F ausgehenden, senkrecht auf der Innenoberfläche des Rohres 14 stehenden Normalen 16 und dem Mittenstrahl des austretenden Laserbündels 59 ist vorzugsweise ein Winkel β3 vorgesehen, der zwischen 10° und 30° beträgt.

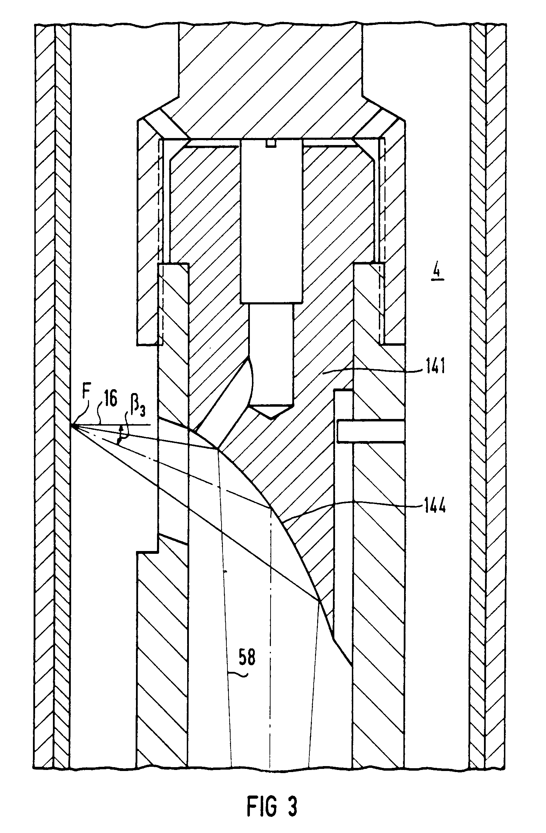

Im Ausführungsbeispiel gemäß **FIG 3** ist in der Umlenkeinheit 4 ein Umlenkspiegel 141 vorgesehen, dessen Spiegelfläche 144 konkav gekrümmt ist. Der Umlenkspiegel 141 dient in dieser Ausführungsform sowohl zum Umlenken des sich in der innerhalb der Sonde ausbreitenden Laserstrahlbündels 58 als auch zum Fokussieren dieses Laserstrahlbündels 58 auf einen außerhalb der Sonde 1 liegenden Brennpunkt F. In dieser Ausführungsform ist eine Linsenanordnung zum Fokussierer der aus dem Lichtwellenleiter austretenden Laserstrahlen nicht mehr erforderlich.

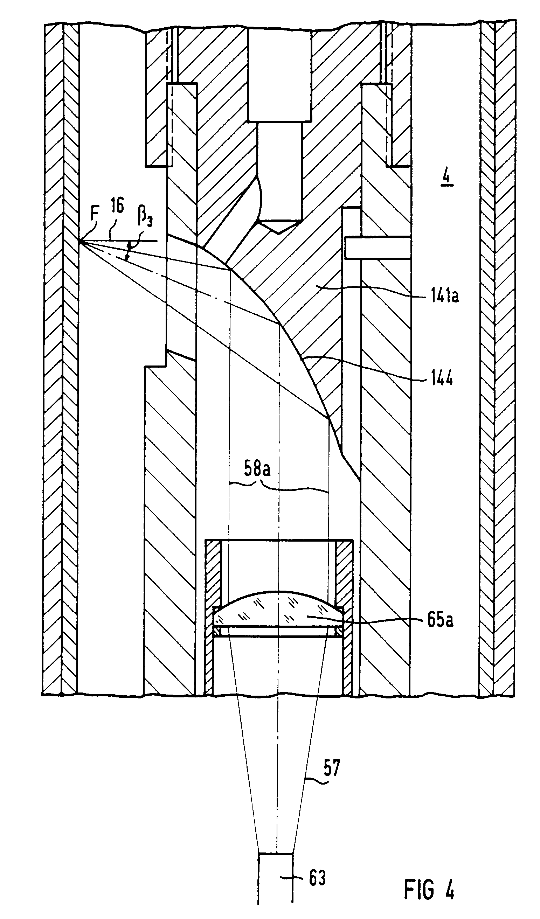

Entsprechend **FIG 4** kann einem konkaven Umlenkspiegel 141a eine Kollimatorlinse 65a vorgeschaltet sein, die ein aus dem Lichtwellenleiter 63 austretendes Laserstrahlbündel 57 zu einem parallelen Bündel 58a kollimiert, das dann vom Umlenkspiegel 141a fokussiert und umgelenkt wird. Dadurch wird bei gleicher Entfernung des Fokus F vom Umlenkspiegel 141a ein größerer Abstand zwischen dem Lichtwellenleiter 63 und dem Umlenkspiegel 141a ermöglicht.

## Patentansprüche

1. Vorrichtung zum Laserschweißen eines Rohres (12, 14) entlang seinem Innenumfang mit einer in das Rohr (12, 14) einführbaren Sonde (1) mit
a) wenigstens einem Abbildungselement (41, 65) zum Fokussieren und Umlenken eines sich innerhalb der Sonde (1) im wesentlichen entlang ihrer Längsachse (10) ausbreitenden Laserstrahlbündels (57),
b) einer Austrittsöffnung (45) durch das ein von dem Abbildungselement (41, 65) erzeugtes umgelenktes fokussiertes Laserstrahlbündel (59) aus der Sonde (1) austritt,
c) innerhalb der Sonde (1) angeordneten Mitteln (70, 78a, 78b, 79) zum Führen eines Schutzgasstromes bis zur Austrittsöffnung (45),
**dadurch gekennzeichnet,** daß
d) ein Teil des Schutzgasstromes durch die Austrittsöffnung (45) ausströmt und
e) Mittel (73, 74, 76) vorgesehen sind, mit denen ein Teil des sich innerhalb der Sonde (1) ausbreitenden Schutzgasstromes vor Erreichen der Austrittsöffnung (45) abzweigbar und mit einer zur Austrittsöffnung (45) hin gerichteten axialen Strömungskomponente zur Außenoberfläche der Sonde (1) führbar ist.

2. Vorrichtung nach Anspruch 1, **dadurch ge****kennzeichnet,** daß innerhalb der Sonde (1) Mittel (77) zur Einstellung des Mengenverhältnisses der beiden Teilgasströme vorgesehen sind.

3. Vorrichtung nach Anspruch 2, **dadurch ge****kennzeichnet,** daß in einem Strömungskanal (70) für einen Teilgasstrom eine Reduzierdüse (77) vorgesehen ist.

4. Vorrichtung nach einem der Ansprüche 1 bis 3, **dadurch gekennzeichnet,** daß zur Führung des nach außen abgezweigten Teilgasstromes eine die Sonoe (1) umgebende Hülse (75) vorgesehen ist, die an ihrer Innenoberfläche mit einer Ringnut (74) versehen ist, in die ein in der Sonde (1) verl-aufender Strömungskanal (73) für den Teilgasstrom mündet und die mit axialen Bohrungen (76) versehen ist, die sich von der dem Kopf der Sonde (1) zugewandten Stirnfläche der Hülse (75) bis zur Ringnut (74) erstrecken.

5. Vorrichtung nach einem der Ansprüche 1 bis 4, **da****durch gekennzeichnet,** daß Mittel vorgesehen sind, mit denen von einem sich innerhalb der Sonde (1) ausbreitenden Schutzgasstrom an der Austrittsöffnung (45) ein Teilgasstrom abgezweigt und durch innerhalb der Sonde (1) liegende Kanäle (53, 54, 55) geführt wird.

6. Vorrichtung nach Anspruch 5, **dadurch ge****kennzeichnet,** daß die Kanäle (53, 54, 55) in eine Ausnehmung (56) des Umlenkspiegels (41, 141) münden, die sich unmittelbar gegenüber der Austrittsöffnung (45) befindet.

7. Vorrichtung nach einem der vorhergehenden Ansprüche, **dadurch gekennzeichnet,** daß ein Abbildungselement (41, 65) vorgesehen ist, das ein in einem außerhalb der Sonde (1) liegenden Brennpunkt (F) fokussiertes umgelenktes Laserstrahlbündel (59) erzeugt, dessen Ausbreitungsrichtung schräg zur Längsachse (10) orientiert ist.

8. Vorrichtung nach Anspruch 7, **dadurch gekenn****zeichnet,** daß der Neigungswinkel (β2) des Mittenstrahls des umgelenkten Laserstrahlbündels (59) gegen die Längsachse (10) im Mittel zwischen 60° und 80° beträgt.

9. Vorrichtung nach Anspruch 7, **dadurch gekenn****zeichnet,** daß die Sonde (1) eine Fokussiereinheit (6) mit wenigstens einer Linse (65) sowie eine Umlenkeinheit (4) mit einem Umlenkspiegel (41) mit einer ebenen Spiegelfläche (44) enthält, deren Oberflächennormale (18) gegen die Längsachse (10) der Sonde (1) einen Winkel (ß1) einschließt, der größer als 45° ist.

10. Vorrichtung nach Anspruch 9, **dadurch gekennzeichnet,** daß dieser Winkel (β1) zwischen 50° und 60° beträgt.

11. Vorrichtung nach Anspruch 7 oder 8, **dadurch** **gekennzeichnet,** daß die Sonde (1) einen konkaven Umlenkspiegel (141) enthält, der sowohl zur Fokussierung als auch zum Umlenken des Laserstrahlbündels (57) vorgesehen ist.

12. Vorrichtung nach Anspruch 11, **dadurch ge****kennzeichnet,** daß bei einer über einen Lichtwellenleiter (63) mit einem Laser optisch gekoppelten Sonde (1) zwischen dem Ende (64) des Lichtwellenleiters (63) und dem konkaven Umlenkspiegel (141) Mittel zum Kollimieren des aus dem Lichtwellenleiter (63) austretenden Laserstrahlbündels (57) vorgesehen sind.

13. Vorrichtung nach einem der Ansprüche 9 bis 12, **dadurch gekennzeichnet,** daß der Umlenkspiegel (41, 141) aus einem Werkstoff mit hoher Wärmeleitfähigkeit besteht.

14. Vorrichtung nach Anspruch 13, **dadurch gekennzeichnet,** daß die Spiegeloberfläche (44, 144) des Umlenkspiegels (41 bzw. 141) mit Gold Au bedampft ist.

15. Vorrichtung nach einem der Ansprüche 7 bis 14, **dadurch gekennzeichnet,** daß zum Auskoppeln des umgelenkten Laserstrahlbündels (59) aus der Sonde (1) eine Austrittsöffnung (45) vorgesehen ist, die einem aus ihr ausströmenden Schutzgasstrom eine axial gerichtete Strömungskomponente erteilt.

16. Verfahren zum Laserschweißen eines Rohres (12, 14) entlang seinem Innenumfang mit folgenden Merkmalen:
a) Aus einem sich innerhalb einer in das Rohr (12, 14) eingeführten Sonde (1) im wesentlichen entlang ihrer Längsachse ausbreitenden Laserstrahlbündel (57) wird ein umgelenktes und auf eine Stelle am Innenumfang des Rohres (14) fokussiertes Laserstrahlbündel (59) erzeugt,
b) das Laserstrahlbündel (59) tritt durch eine Austrittsoffnung (45) aus der Sonde (1) aus,
c) der Sonde (1) wird ein Schutzgasstrom zugeführt, das in ihrem Inneren in Richtung zur Austrittsöffnung (45) strömt,
**dadurch gekennzeichnet,** daß
d) ein Teil des Schutzgasstromes durch die Austrittsöffnung (45) ausströmt und
e) ein weiterer Teil vor Erreichen der Austrittsöffnung (45) abgezweigt wird und mit einer axialen Strömungskomponente in den zwischen dem Rohr (12, 14) und der Sonde (1) befindlichen Zwischenraum geleitet wird.

17. Verfahren nach Anspruch 16, **dadurch gekennzeichnet,** daβ von dem sich innerhalb der Sonde (1) zur Austrittsöffnung (45) ausbreitenden Schutzgasstrom innerhalb der Sonde (1) an der Austrittsöffnung (45) ein weiterer Teilgasstrom mit einer axial gerichteten Strömungskomponente abgezweigt wird, der sich innerhalb der Sonce (1) ausbreitet.

18. Verfahren nach einem der Ansprüche 16 oder 17, **da****durch gekennzeichnet**, daß das Laserstrahlbündel (57) schräg zur Längsachse (10) der Sonde (1) umgelenkt wird.

19. Verfahren nach einem der Ansprüche 16 bis 18, **dadurch gekennzeichnet,** daβ ein im cw-Betrieb arbeitender Festkörperlaser verwendet wird.

## Claims

1. A device for laser welding of a tube (12, 14) along its inner periphery with a probe (1) able to be introduced into the tube (12, 14) with
(a) at least one imaging element (41, 65) for focusing and deflecting a laser beam (57) Propagating within the probe (1) substantially along its longitudinal axis (10),
(b) an outlet opening (45) through which a deflected focused laser beam (59) produced by the imaging element (41, 65) exits from the probe (1),
(c) means (70, 78a, 78b, 79) arranged inside the probe (1) for guiding a flow of protective gas up to the outlet opening (45),
characterised in that
(d) part of the flow of protective gas flows out through the outlet opening (45) and
(e) means (73, 74, 76) are provided with which a part of the flow of protective gas propagating within the probe (1) is able to branch off before reaching the outlet opening (45) and is able to be guided with an axial flow component directed towards the outlet opening (45) to the outer surface of the probe (1).

2. A device according to claim 1, characterised in that means (77) are provided inside the probe (1) for adjusting the quantitative composition of the two partial flows of gas.

3. A device according to claim 2, characterised in that a reducing nozzle (77) is provided in a flow channel (70) for a partial flow of gas.

4. A device according to one of claims 1 to 3, characterised in that in order to guide the partial flow of gas, branched off outwards, a sleeve (75) is provided surrounding the probe (1), which is provided on its inner surface with an annular groove (74) into which there opens a flow channel (73) extending in the probe (1) for the partial flow of gas and which is provided with axial bores (76) which extend from the end face of the sleeve (75) facing the head of the probe (1) up to the annular groove (74).

5. A device according to one of claims 1 to 4, characterised in that means are provided with which a partial flow of gas is branched off from a flow of protective gas propagating inside the probe (1) at the outlet opening (45) and is guided by channels (53, 54, 55) lying inside the probe (1).

6. A device according to claim 5, characterised in that the channels (53, 54, 55) open into a recess (56) of the deflecting mirror (41, 141) which is located directly opposite the outlet opening (45).

7. A device according to one of the preceding claims, characterised in that an imaging element (41, 65) is provided which produces a deflected laser beam (59) focused in a focal point (F) lying outside the probe (1), the direction of propagation of which is directed inclined to the longitudinal axis (10).

8. A device according to claim 7, characterised in that the angle of inclination (β2) of the central ray of the deflected laser beam (59) relative to the longitudinal axis (10) lies on average between 60° and 80°.

9. A device according to claim 7, characterised in that the probe (1) comprises a focusing unit (6) with at least one lens (65) as well as a deflecting unit (4) with a deflecting mirror (41) with a plane mirror surface (44), the line (18) normal to the surface of which relative to the longitudinal axis (10) of the probe (1) forms an angle (β1) which is larger than 45°.

10. A device according to claim 9, characterised in that this angle (β1) is between 50° and 60°.

11. A device according to claim 7 or 8, characterised in that the probe (1) comprises concave deflecting mirror (141) which is provided for focusing as well as for deflecting the laser beam (57).

12. A device according to claim 11, characterised in that with probe (1) optically coupled to a laser by way of an optical waveguide (63) between the end (64) of the optical waveguide (63) and the concave deflecting mirror (141), means are provided for collimating the laser beam (57) exiting from the optical waveguide (63).

13. A device according to one of claims 9 to 12, characterised in that the deflecting mirror (41, 141) is made of a material with a high thermal conductivity.

14. A device according to claim 13, characterised in that the mirror surface (44, 144) of the deflection mirror (41 or 141) is metallized with gold Au.

15. A device according to one of claims 7 to 14, characterised in that for tapping off the deflected laser beam (59) from the probe (1) there is provided an outlet opening (45), which imparts an axially directed flow component to a stream of protective gas flowing out of it.

16. A method for laser welding of a tube (12, 14) along its inner periphery with the following features:
(a) a deflected laser beam (59) focused on a point on the inner periphery of the tube (14) is produced from a laser beam (57) in a probe (1), introduced into the tube (12, 14), propagating substantially along the longitudinal axis of said probe,
(b) the laser beam (59) exits through an outlet opening (45) from the probe (1),
(c) a flow of protective gas is supplied to the probe (1), which flows in its interior in the direction of the outlet opening (45), characterised in that
(d) a part of the flow of protective gas flows out through the outlet opening (45) and
(e) a further part branches off before reaching the outlet opening (45) and is led with an axial flow component into the intermediate space located between the tube (12, 14) and the probe (1).

17. A method according to claim 16, characterised in that at the outlet opening (45) inside the probe (1) a further partial flow of gas with an axially directed flow component is branched off from the flow of protective gas propagating inside the probe (1) to the outlet opening (45).

18. A method according to one of claims 16 or 17, characterised in that the laser beam (57) is deflected inclined relative to the longitudinal axis (10) of the probe (1).

19. A method according to one of claims 16 to 18, characterised in that a solid body laser is used functioning in the cw mode.

## Revendications

1. Dispositif de soudage par laser d'un tube (12, 14) le long de sa périphérie intérieure, comportant une sonde (1) pouvant être introduite dans le tube (12, 14), et comprenant
a) au moins un élément de formation d'images (41, 65) servant à focaliser et faire dévier un faisceau laser (57) qui se propage à l'intérieur de la sonde (1), sensiblement le long de son axe longitudinal (10),
b) une ouverture de sortie (45) par laquelle un faisceau laser focalisé et dévié (59), produit par l'élément de formation d'images (41, 65), sort de la sonde (1),
c) des moyens (70, 78a, 78b, 79) disposés à l'intérieur de la sonde (1) servant à envoyer un courant de gaz protecteur jusqu'à l'ouverture de sortie (45),
caractérisé par le fait que
d) une partie du courant du gaz protecteur sort par l'ouverture de sortie (45), et
e) il est prévu des moyens (73, 74, 76), à l'aide desquels une partie du courant du gaz protecteur, qui se propage a l'intérieur de la sonde (1), peut être dérivée avant d'atteindre l'ouverture de sortie (45) et être envoyée à la surface extérieure de la sonde (1) avec une composante d'écoulement axiale, dirigée vers l'ouverture de sortie (45).

2. Dispositif suivant la revendication 1, caractérisé par le fait que des moyens (77) sont prévus à l'intérieur de la sonde (1) pour régler le rapport quantitatif des deux courants de gaz partiels.

3. Dispositif suivant la revendication 2, caractérisé en ce qu'une buse réductrice (77) est prévue dans un canal d'écoulement (70) pour un courant de gaz partiel.

4. Dispositif suivant l'une des revendications 1 à 3, caractérisé par le fait que pour le guidage du courant de gaz partiel dérivé vers l'extérieur il est prévu une douille (75) qui entoure la sonde (1) et comporte, dans sa surface intérieure, une gorge annulaire (74), dans laquelle débouche un canal d'écoulement (73), qui s'étend dans la sonde (1), pour le courant de gaz partiel et qui comporte des perçages axiaux (76), qui s'étendent depuis la surface frontale de la douille (75), tournée vers la tête de la sonde (1), jusqu'à la gorge annulaire (74).

5. Dispositif suivant l'une des revendications 1 à 4, caractérisé en ce qu'il est prévu des moyens, à l'aide desquels un courant de gaz partiel est dérivé d'un courant de gaz protecteur se propageant à l'intérieur de la sonde (1), ce courant de gaz partiel étant guidé dans des canaux (53, 54 et 55) situés à l'intérieur de la sonde (1).

6. Dispositif selon la revendication 5, caractérisé en ce que les canaux (53, 54, 55) débouchent dans un évidement (56) du miroir déviateur (41, 141), qui est situé directement en vis-à-vis de l'ouverture de sortie (45).

7. Dispositif suivant l'une des revendications précédentes, caractérisé par le fait qu'il est prévu un élément de formation d'images (41, 65), qui produit un faisceau laser dévié (59), focalisé sur un foyer (F) situé à l'extérieur de la sonde (1) et dont la direction de propagation est orientée obliquement par rapport à l'axe longitudinal (10).

8. Dispositif suivant l'une des revendications 7, caractérisé en ce que l'angle d'inclinaison (β2) du rayon central du faisceau laser dévié (59) fait en moyenne un angle compris entre 60° et 80° par rapport à l'axe longitudinal (10).

9. Dispositif suivant l'une des revendications 7, caractérisé par le fait que la sonde (1) comporte une unité de focalisation (6) pourvue au moins une lentille (65) ainsi qu'une unité déviateur (4) présentant un miroir déviateur (41) présentant une surface réfléchissante plane (44), dont la normale (18) fait avec l'axe longitudinal (10) de la sonde (1), un angle (β1) supérieur à 45°.

10. Dispositif suivant la revendication 9, caractérisé en ce que cet angle (β1) est compris entre 50° et 60°.

11. Dispositif suivant la revendication 7 ou 8, caractérisé par le fait que la sonde (1) comporte un miroir déviateur concave (41), qui est prévu aussi bien pour focaliser que pour faire dévier le faisceau laser (57).

12. Dispositif suivant la revendication 11, caractérisé par le fait que dans le cas d'une sonde (1) couplée optiquement à un laser par l'intermédiaire d'un guide d'ondes lumineuses (63), entre l'extrémité (64) du guide d'ondes lumineuses (63) et le miroir déviateur concave (141), il est prévu des moyens pour collimater le faisceau laser (57) qui sort du guide d'ondes lumineuses (63).

13. Dispositif suivant l'une des revendications 9 à 12, caractérisé par le fait que le miroir déviateur (41, 141), est constitué par un matériau possèdant une haute conductibilité thermique.

14. Dispositif suivant la revendication 13, caractérisé par le fait que la surface réfléchissante (44, 144) du miroir déviateur (41 ou 141) est recouvert d'un dépôt d'or Au formé par dépôt par évaporation.

15. Dispositif suivant l'une des revendications 7 à 14, caractérisé par le fait que pour le découplage du faisceau laser dévié (59) à partir de la sonde (1), il est prévu une ouverture de sortie (45), qui imprime une composante d'écoulement dirigée axialement, à un courant de gaz protecteur sortant par cette ouverture.

16. Procédé de soudage par laser d'un tube (14) le long de son pourtour intérieur, présentant les particularités suivantes :
a) un faisceau laser (59) dévié et focalisé en un emplacement sur le pourtour intérieur du tube (14) est produit à partir d'un faisceau laser (57) qui se propage à l'intérieur d'une sonde (1) introduite dans le tube (12, 14), sensiblement le long de son axe longitudinal,
b) le faisceau laser (59) sort de la sonde (1) par une ouverture de sortie (45),
c) un courant de gaz protecteur est envoyé à la sonde (1), ce courant traversant l'intérieur de la sonde en direction de l'ouverture de sortie (43),
caractérisé par le fait que
d) une partie du courant de gaz protecteur sort par l'ouverture de sortie (45), et
e) une autre partie est dérivée avant d'atteindre l'ouverture de sortie (45) et est dirigée, avec une composante d'écoulement axiale dans l'espace intercalaire situé entre le tube (12, 14) et la sonde (1).

17. Procédé suivant la revendication 16, caractérisé par le fait qu'un autre courant de gaz partiel possédant une composante d'écoulement dirigée axialement et qui se propage à l'intérieur de la sonde (1), est dérivé à l'intérieur de la sonde (1), au niveau de l'ouverture de sortie (45), à partir du courant de gaz protecteur qui se propage à l'intérieur de la sonde (1) en direction de l'ouverture de sortie (45).

18. Procédé suivant l'une des revendications 16 ou 17, caractérisé par le fait que le faisceau laser (57) est dévié obliquement par rapport à l'axe longitudinal (10) de la sonde (1).

19. Procédé suivant l'une des revendications 7 à 18, caractérisé par le fait qu'on utilise un laser à corps solide travaillant en continu.
